# EUROPEAN PATENT APPLICATION

(11) **EP 3 961 109 A1**
(43) Date of publication of application: **02.03.2022**
(21) Application number: 21192615.9
(22) Date of filing: 23.08.2021
(51) Int. Cl.: F24D 3/08, F24D 3/18, F24D 10/00, F24D 11/02, F24D 17/02

(54) **DEVICE FOR THE LOCAL PROVISION OF HOT WATER AND BUFFER TANK**

(30) Priority: 26.08.2020 BE 202005592
(71) Applicant: SEDS BVBA, 2380 Ravels (BE)
(72) Inventor: SEVERYNS, Eric Frans Elisa, 2380 Ravels (BE)
(74) Representative: Van hunsel, Lieven M.S.

(57) **Abstract**

Device (1) for the local provision of hot water, the device (1) being connected to a central distribution network (2) with water at a certain temperature;
whereby the device (1) is provided with a buffer tank (6) with a booster heat pump (7) for heating the water in the buffer tank (6), whereby the booster heat pump (7) will use heat from the distribution network (2);
whereby the device (1) is provided with an inlet (8) for cold water and an outlet (9) for sanitary hot water, and with means (10) for heating the cold water to sanitary hot water using the heat of the buffer tank (6);
whereby the device (1) is provided with an additional heat exchanger (19) which is located downstream from the inlet (8) for preheating cold water, whereby the additional heat exchanger (19) uses heat from the distribution network (2) and whereby the additional heat exchanger (19) is located in the buffer tank (6).

## Description

The present invention relates to a device for the local provision of hot water.

In particular, the invention is intended for a device or system that will allow, using a central distribution water network or water distribution circuit, the production of hot water locally, it being possible to apply said hot water as sanitary hot water and/or as a source of heating.

The invention is exceptionally suitable for application in collective homes or residential buildings with different living units, such as for example blocks of flats, however, the invention is not restricted to this. The invention is also suitable for application in hospitals, assisted living centres, etc. for example. In such situation a 'living unit' must be interpreted as separate rooms, units or (parts of) floors. The invention is also suitable for individual homes connected to a municipal network.

It is known that to date a central collective heating system is used in such buildings which will generate the hot water at a high temperature centrally, i.e. in one location, and subsequently circulate it through the building to the different living units.

The main reason for this is to save space, as no individual boilers or hot water boilers are needed.

However, such systems do have the disadvantage that all the hot water in the central collective heating system must be heated to a very high temperature to offset the transport losses and to heat the sanitary hot water to a sufficiently high temperature, taking into account the legionella problem. This involves high costs.

Moreover, it is difficult to realise such systems based on a very high temperature of the distribution network using renewable energy, as this is only possible by connecting said systems to an external heat network. Sources of renewable energy which are applicable on the level of the building itself are unsuitable due to the high temperature of the return circuit.

Another disadvantage is that the high temperature of the water which is circulated through the building causes the building to heat up, which due to contemporary far reaching insulation standards can lead to excessive heating up of the building, which certainly in summer can lead to overheating such that active and energy wasting cooling is needed in the form of air conditioning units, etc.

As the sanitary hot water is generated centrally, said water must always be distributed at a high temperature, i.e. at least 65°C, also to avoid that bacteria is given the chance to multiply in the water. However, the heat losses which occur during transport can cause the temperature of the water to drop too much such that the risk of bacteria increases.

The purpose of the present invention is to provide a solution to at least one of the aforementioned and other disadvantages.

The object of the present invention is a device for the local provision of hot water, characterised in that the device is connected to a central distribution network with water at a certain temperature; whereby the device is provided with a buffer tank with water and with a booster heat pump to heat the water in the buffer tank, whereby the booster heat pump will use heat from the central distribution network, whereby the buffer tank is provided with an entry for cold water and an exit for sanitary hot water; whereby the device is further provided with an inlet for cold water and an outlet for sanitary hot water, whereby the entry is connected to the inlet and whereby the exit is connected to the outlet, whereby the device comprises means for heating said cold water to sanitary hot water using the heat of the buffer tank; whereby the device is further provided with an additional heat exchanger which is located downstream from the inlet and upstream from the entry for preheating cold water before it is heated by means of said means, whereby the additional heat exchanger uses heat from the central distribution network and whereby the additional heat exchanger is entirely located in the buffer tank.

The central distribution network will circulate water at a certain temperature throughout the whole building, whereby the device according to the invention, will provide hot water locally, i.e. per living unit, using the booster heat pump.

It is known that a booster heat pump based on a medium, for example water, at a relatively low temperature, can efficiently heat another medium, for example also water, to a high temperature.

This provides the advantage that the temperature of the water in the central distribution network can be kept relatively low, as, firstly, this water will not be used for sanitary hot water and, secondly, the booster heat pump does not require a high temperature of said water to be able to heat the sanitary water.

The temperature of the water in the central distribution network can thus be kept lower, such that said disadvantages are avoided.

The advantage of the additional heat exchanger is that the water, which ends up in the means for heating said cold water to sanitary hot water using the heat of the buffer tank, is already at a higher temperature, such that the additional heating to be provided by the booster heat pump is limited.

Consequently, the use of the booster heat pump can be kept to a minimum, such that the related (electricity) costs remain limited. The available quantity of sanitary hot water also increases which benefits the convenience.

It is important to note that the additional heat exchanger will preheat the sanitary water before the sanitary water in the buffer tank is heated further if so desired. These are therefore two separate steps, whereby the additional heat exchanger will achieve no or negligible heating of water in the buffer tank, but only of water still upstream from the entry to the buffer tank.

Because the additional heat exchanger uses the heat from the central distribution network, said heat exchanger will be able to preheat the cold water to a few degrees, typical approximately 4°C below the temperature of the central distribution network.

As the temperature in the additional heat exchanger will always be around the temperature of the central distribution network, the risk exists of bacteria forming after the cold water is heated by the additional heat exchanger as in principle it will never reach the necessary temperature to prevent bacteria forming.

By placing said heat exchanger in the buffer tank, which can be kept at a sufficiently high temperature by the booster heat pump, the additional heat exchanger will also reach said high temperature such that bacteria cannot form.

'The additional heat exchanger is entirely located in the buffer tank' means that both a primary and a secondary section of the additional heat exchanger are physically located in the buffer tank, i.e. are surrounded by buffer water.

In a practical embodiment the device is further provided with control means to branch off water from the central distribution network for a local heating circuit.

Said local heating circuit is for example floor heating or heating radiators. "Local" here means only for the relevant living unit.

In other words: in such case the device provides sanitary hot water and heating.

The temperature in the central distribution network only needs to be kept high enough to be able to provide for the local heating circuit, such that only the buffer tank needs to reach a sufficiently high temperature to be able to provide sanitary hot water.

Because a smaller quantity of water needs to be heated to a high temperature, compared to the traditional systems, the (heating) costs will be much lower.

Obviously it is not excluded that said local heating circuit is also used for cooling. In case of floor heating, for example, this is certainly one of the possibilities.

In another practical embodiment the device is further provided with a water circuit for a heating system, whereby said water circuit comprises a heat exchanger which will use heat from the buffer tank for heating the water in the water circuit.

This provides the advantage that the device is also provided with a water circuit for a heating system.

This water circuit is heated with the buffer tank, which is at a relatively high temperature, such that said heating will also generate a lot of heat, such that the heating can, for example, be a bathroom radiator.

Preferably said means for heating said cold water to sanitary hot water using the heat of the buffer tank comprise a spiral heat exchanger which extends through the buffer tank between an entry and an exit of the buffer tank and is connected to the inlet for cold water and the outlet for sanitary hot water.

This means: the water in the buffer tank is so-called 'dead water' and is not used for the provision of sanitary water.

Alternatively it is also possible that said means for heating said cold water to sanitary hot water using the heat of the buffer tank comprise that said inlet for cold water is connected to an entry of the buffer tank and that said outlet for sanitary hot water is connected to an exit of the buffer tank, whereby said entry and exit are located at two opposite sides of the buffer tank.

In this case the water in the buffer tank is indeed used as sanitary water and on taking sanitary hot water from the buffer tank, new or fresh cold water will be added to the buffer tank.

The invention also relates to a buffer tank with water and with a booster heat pump for heating the water in the buffer tank;
whereby the buffer tank is provided with an entry for cold water and an exit for sanitary hot water, whereby the buffer tank comprises means for heating said cold water to sanitary hot water using the heat of the buffer tank;
whereby the buffer tank is further provided with an additional heat exchanger which is located upstream from the entry for preheating cold water before it is heated by means of said means, whereby the additional heat exchanger is located entirely in the buffer tank.

The advantage of the additional heat exchanger is that the water, which ends up in the buffer tank is already at a higher temperature, such that the additional heating to be provided by the booster heat pump is limited.

Consequently, the use of the booster heat pump can be kept to a minimum, such that the related (electricity) costs remain limited.

By placing said heat exchanger in the buffer tank, which can be kept at a sufficiently high temperature by the booster heat pump, the additional heat exchanger will also reach said high temperature such that bacteria cannot form.

With the intention of better showing the characteristics of the invention, hereinafter, by way of an example without any limiting nature, a number of preferred variants are described of a device according to the invention for the local provision of hot water and a buffer tank, with reference to the accompanying drawings, wherein:

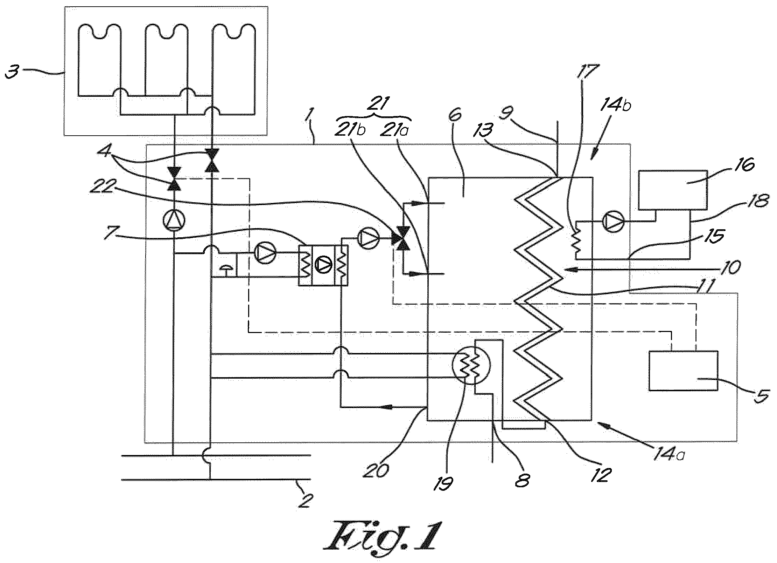

figure 1 schematically shows a device according to the invention.

Figure 1, besides the device 1 according to the invention, also shows a central distribution network 2 to which the device 1 is connected.

This central distribution network 2 will circulate water at a certain temperature to every living unit in, for example, an apartment building.

In this case, but not necessarily for the invention, the central distribution network 2, will provide water for local heating circuits 3, for example for floor heating or central heating in the relevant living unit.

To this end, the device 1 is provided with control means 4 to branch off water from the central distribution network 2 for a local heating circuit 3.

Said control means 4 comprise valves, taps, sensors, etc. and a control unit 5 for controlling them.

The device 1 according to the invention comprises a buffer tank 6 with water.

There is also a booster heat pump 7 present which can heat the water in the buffer tank 6. This is done by tapping off some of the water in the buffer tank 6 and sending it via the booster heat pump 7 for heating and subsequently feeding the heated water back into the buffer tank 6.

The booster heat pump 7 is coupled with the central distribution network 2 to be able to use the heat of said central distribution network 2 for heating the water in the buffer tank 6.

The device 1 according to the invention also comprises an inlet 8 for cold water and an outlet 9 for sanitary hot water and means 10 for heating said cold water to sanitary hot water using the heat of the buffer tank 6.

In the example shown, but not necessarily for the invention, said means 10 for heating said cold water to sanitary hot water using the heat of the buffer tank 6 comprise a spiral heat exchanger 11.

The spiral heat exchanger 11 extends through the buffer tank 6 from an entry 12 of the buffer tank 6 up to an exit 13 of the buffer tank 6. According to the invention said entry 12 is connected to the inlet 8 and said exit 13 is connected to the outlet 9.

As shown in the figure, the entry 12 and the exit 13 of the buffer tank 6 are on two opposite sides 14a respectively 14b of the buffer tank 6.

It is also possible that said means 10 only comprise that said inlet 8 for cold water is connected to the entry 12 of the buffer tank 6 and that said outlet 9 for sanitary hot water is connected to the exit 13 of the buffer tank 6, whereby water can be added to the buffer tank 6 via the entry 12 and whereby water can be taken from the buffer tank 6 via the exit 13. In such situation the buffer tank 6 is therefore not a volume of 'dead water'.

Finally, in this case, but not necessarily for the invention, the device 1, also comprises a water circuit 15 for a heating system 16, whereby said water circuit 15 comprises a heat exchanger 17 which will use heat from the buffer tank 6 for heating the water in the water circuit 15.

The water circuit 15 is part of a closed water circuit 18 in which said heating system 16, together with said heat exchanger 17, is integrated.

Said heating system 16 relates to, for example, a bathroom radiator in this case. Unlike said floor heating of the local circuit 3, such type of heating system 16 requires a relatively high temperature. The temperature in the central distribution circuit 2 is too low for this.

The heat exchanger 17 will allow the water in the water circuit 15 to be heated to the level of the water in the buffer tank 6, which is much higher than the temperature of the central distribution circuit 2.

Figure 1 also shows that the device 1 according to the invention is further provided with an additional heat exchanger 19 which is located downstream from the inlet 8 for preheating cold water before it is heated by means of said means 10, whereby the additional heat exchanger 19 uses heat from the central distribution network 2.

The additional heat exchanger 19 is integrated downstream from the inlet 8 for cold water and upstream from the entry 12 of the buffer tank 6.

According to the invention the additional heat exchanger 19 is situated entirely in the buffer tank 6 itself.

This means that both the primary section and the secondary section of the additional heat exchanger 19 are physically located in the buffer tank 6, as shown in figure 1.

In the example shown the operation of the booster heat pump 7 for heating the water in the buffer tank 6 is realised as follows.

Water from the buffer tank 6 is tapped off via a tap off opening 20, said water subsequently passes through the booster heat pump 7 for heating.

As shown in the figure, and as already explained, the booster heat pump 7 is coupled with the central distribution network 2 for boosting said heat and releasing it to the buffer water.

The water heated by the booster heat pump 7 is returned to the buffer tank 6 afterwards via a feed opening 21 which is located in a location which, for obvious reasons, is situated at a distance from the tap off opening 20.

As shown in the figure, the tap off opening 20 is located near the entry 12 of the buffer tank 6. Typically this is the coldest location of the buffer tank 6, because the water in the buffer tank 12 is cooled down quickest here by the cold water in the spiral heat exchanger 11 or because the cold water enters the buffer tank 6 in said location.

In the example shown the feed opening 21 comprises two sub feed openings 21a, 21b, of which one sub feed opening 21a is located near the exit 13 of the buffer tank 6 and one sub feed opening 21b is located between the entry 12 and the exit 13.

A control valve 22 is provided to determine how much water via which sub feed opening 21a, 21b goes to the buffer tank 6.

In this case, the control valve 22 is a three-way switch valve, such that either via sub feed opening 21a or via sub feed opening 21b water goes to the buffer tank 6. It is also possible that instead of a three-way switch valve, a control valve 22 is used which will allow the water flow to be split, whereby a part goes via sub feed opening 21a and the remaining part via sub feed opening 21b.

Said control valve 22 is also controlled via the control unit 5.

This setup means the side 14b of the buffer tank 6 at the exit 13 will be at a higher temperature than the side 14a of the buffer tank 6 at the entry 12.

In this way a so-called stratification of the buffer water is created whereby a temperature gradient is created which increases from the entry 12 towards the exit 13.

The two sub feed openings 21a, 21b allow checking where the heated buffer water ends up in the buffer tank 6, and therefore checking whether the middle of the buffer tank 6 or the side 14b of the buffer tank 6 at the exit 13 is heated.

The operation of the device 1 is very simple and as follows.

The central distribution network 2 will circulate water at a certain temperature through the whole building.

The temperature of the water will depend on the season and the required temperature or heat for the sanitary hot water and said water circuit 15 and is typically between 16°C and 45°C.

This means that said temperature will be lower in the summer than in the winter.

Each living unit will be provided with the device 1 according to the invention, which, using the control unit 5, will tap off part of said water and send it to the local heating circuit 3, i.e. floor heating. The control unit 5 of the device 1 can check the temperature.

Obviously in the summer, when the temperature of the water in the central distribution network 2 will be lower, the local circuit 3 can also be used for cooling.

When there is a demand for sanitary hot water, i.e. when water is tapped off from the outlet 9 for sanitary hot water by a user, additional cold water will end up in the device 1 via the inlet 8 for cold water.

Said cold water first passes via the additional heat exchanger 19, which will preheat the cold water to a temperature that is a few degrees below the temperature of the central distribution network 2.

Subsequently it ends up in the spiral heat exchanger 11 via the entry 12.

The passage through said spiral heat exchanger 11 will further heat the preheated water through heat exchange with the buffer water.

As the water is already preheated, this additional heating will be limited.

Finally, the hot water will leave the device 1 via the exit 13 of the buffer tank 6 and the outlet 9 for sanitary hot water and be delivered to the user.

Due to the heat exchange via the spiral heat exchanger 11, the water in the buffer tank 6 will cool down. As already mentioned, this will be very limited due to the preheating using the additional heat exchanger 19. If the water in the buffer tank 6 were to cool down too much, the booster heat pump 7 will heat the buffer water again.

Water is tapped off via the tap off opening 20 from the buffer tank 6 and heated via the booster heat pump 7 using the available heat of the central distribution network 2.

This heated buffer water is returned to the buffer tank 6 via the feed openings 21a, 21b to heat the buffer tank 6.

The water in the buffer tank 6 will be heated either in the middle of the buffer tank 6 or on the side 14b of the buffer tank 6 at the exit 13.

This is regulated via the control valve 22, which is controlled by the control unit 5.

When the side 14a of the buffer tank 6 cools down too much at the entry 12, heating is first via the middle of the buffer tank 6.

Consequently not only the side 14a of the buffer tank 6 is heated at the entry 12, but it is also avoided that the side 14b of the buffer tank 6 at the exit 13, which has not cooled down yet, cools down too much by the water coming out of the booster heat pump 7 at a lower temperature.

When the side 14a of the buffer tank 6 is heated at the entry 12, and the water coming out of the booster heat pump 7 will have a higher temperature, the water can be returned to the side 14b of the buffer tank 6 at the exit 13.

However, when at the outlet 9 for sanitary hot water, water is tapped off by a user, the heated buffer water will be added to the buffer tank 6 on the side 14b of the exit 13, i.e. the water in the buffer tank 6 will be heated on the side 14b of the buffer tank 6 at the exit 13, such that a high temperature of the outgoing sanitary hot water is obtained for as long as possible, and this as long as the outgoing temperature of the booster heat pump 7 is higher than the temperature of the side 14b of the buffer tank 6.

To make such control possible, the necessary sensors, not shown on the figure, are provided.

When the user wants to use the bathroom radiator 16, the device 1 will heat the water in the water circuit 15 using said heat exchanger 17.

As shown in the figure, said heat exchanger 17 is located in the buffer tank 6 approximately in the middle of the buffer tank 6. In this way it is avoided that the side 14b of the buffer tank 6, which typically is kept at the highest possible temperature for heating the sanitary hot water, cools down.

Consequently the water in the water circuit 15 can be heated to the temperature of the buffer tank 6.

When the heat exchange in said heat exchanger 17 causes the temperature of the buffer tank 6 to drop too much, the buffer tank 6 can be heated using the booster heat pump 7, in the same way as explained above.

It is understood that the control unit 5 can control more components of the device 1 than the components explicitly mentioned in the text.

The object of the present invention is a device for the local provision of hot water, characterised in that the device is connected to a central distribution network with water at a certain temperature; whereby the device is provided with a buffer tank with water and with a booster heat pump to heat the water in the buffer tank, whereby the booster heat pump will use heat from the central distribution network; whereby the device is further provided with an inlet for cold water and an outlet for sanitary hot water, whereby the device comprises means for heating said cold water to sanitary hot water using the heat of the buffer tank; whereby water from the buffer tank is tapped off via a tap off opening, then passes via the booster heat pump for heating and is returned to the buffer tank afterwards via a feed opening in a location at a distance from the tap off opening, the tap off opening being located near the entry of the buffer tank and that the feed opening comprises two sub feed openings, of which one sub feed opening is located near the exit of the buffer tank and one sub feed opening is located between the entry and the exit of the buffer tank, whereby a control valve is provided to determine how much water goes to the buffer tank via each sub feed opening.

Such device is therefore not necessarily provided with said additional heat exchanger.

The invention also relates to a buffer tank with water and with a booster heat pump for heating the water in the buffer tank; whereby the buffer tank is provided with an entry for cold water and an exit for sanitary hot water, whereby the buffer tank comprises means for heating said cold water to sanitary hot water using the heat of the buffer tank; whereby water from the buffer tank is tapped off via a tap off opening, then passes via the booster heat pump for heating and is returned to the buffer tank afterwards via a feed opening in a location at a distance from the tap off opening, the tap off opening being located near the entry of the buffer tank and the feed opening comprising two sub feed openings, of which one sub feed opening is located near the exit of the buffer tank and one sub feed opening is located between the entry and the exit of the buffer tank, whereby a control valve is provided to determine how much water goes to the buffer tank via each sub feed opening.

Such buffer tank is therefore not necessarily provided with said additional heat exchanger.

The present invention is by no means limited to the embodiments described as an example and shown in the figures, however, such a device and method according to the invention for the local provision of hot water and buffer tank can be realised according to different variants, without departing from the scope of the invention.

## Claims

1. Device (1) for the local provision of hot water, **characterised in that** the device (1) is connected to a central distribution network (2) with water at a certain temperature;
whereby the device (1) is provided with a buffer tank (6) with water and with a booster heat pump (7) to heat the water in the buffer tank (6), whereby the booster heat pump (7) will use heat from the central distribution network (2), whereby the buffer tank is provided with an entry (12) for cold water and an exit (13) for sanitary hot water;
whereby the device (1) is further provided with an inlet (8) for cold water and an outlet (9) for sanitary hot water, whereby the entry (12) is connected to the inlet (8) and whereby the exit (13) is connected to the outlet (9), whereby the device (1) comprises means (10) for heating said cold water to sanitary hot water using the heat of the buffer tank (6);
whereby the device (1) is further provided with an additional heat exchanger (19) which is located downstream from the inlet (8) and upstream from the entry (12) for preheating cold water before it is heated by means of said means (10), whereby the additional heat exchanger (19) uses heat from the central distribution network (2) and whereby the additional heat exchanger (19) is entirely located in the buffer tank (6).

2. Device according to claim 1, **characterised in that** the device (1) is further provided with a water circuit (15) for a heating system (16), whereby said water circuit (15) comprises a heat exchanger (17) which will use heat from the buffer tank (6) for heating the water in the water circuit (15).

3. Device according to claim 1 or 2, **characterised in that** the device (1) is further provided with control means (4) to tap off water from the central distribution network (2) for a local heating circuit (3).

4. Device according to any one of the previous claims, **characterised in that** said means (10) for heating said cold water to sanitary hot water using the heat of the buffer tank (6) comprise a spiral heat exchanger (11) which extends through the buffer tank (6) between an entry (12) and an exit (13) of the buffer tank (6) and is connected to the inlet (8) for cold water and the outlet (9) for sanitary hot water.

5. Device according to any one of the previous claims 1 to 4, **characterised in that** said means (10) for heating said cold water to sanitary hot water using the heat of the buffer tank comprise that said inlet (8) for cold water is connected to an entry (12) of the buffer tank (6) and that said outlet (9) for sanitary hot water is connected to an exit (13) of the buffer tank (6), whereby said entry (12) and exit (13) are located at two opposite sides (14a, 14b) of the buffer tank (6).

6. Device according to any one of the previous claims, **characterised in that** water from the buffer tank (6) is tapped off via a tap off opening (20), then passes via the booster heat pump (7) for heating and is returned to the buffer tank (6) afterwards via a feed opening (21) in a location at a distance from the tap off opening (20).

7. Device according to claim 6, **characterised in that** the tap off opening (20) is located near the entry (12) of the buffer tank (6) and that the feed opening (21) comprises two sub feed openings (21a, 21b), of which one sub feed opening (21a) is located near the exit (13) of the buffer tank and one sub feed opening (21b) is located between the entry (12) and the exit (13) of the buffer tank (6), whereby a control valve (23) is provided to determine how much water goes via each sub feed opening (21a, 21b) to the buffer tank (6).

8. Device according to claim 3, **characterised in that** said local heating circuit (3) can also be used for cooling.

9. Buffer tank (6) with water and with a booster heat pump (7) to heat the water in the buffer tank (6);
whereby the buffer tank is provided with an entry (12) for cold water and an exit (13) for sanitary hot water, whereby the buffer tank (6) comprises means (10) for heating said cold water to sanitary hot water using the heat of the buffer tank (6);
whereby the buffer tank (6) is further provided with an additional heat exchanger (19) which is located upstream from the entry (12) for preheating cold water before it is heated by means of said means (10), whereby the additional heat exchanger (19) is located entirely in the buffer tank (6) .
